# EUROPEAN PATENT APPLICATION

(11) **EP 1 312 581 A2**
(43) Date of publication of application: **21.05.2003**
(21) Application number: 02025033.8
(22) Date of filing: 11.11.2002
(51) Int. Cl.: C01B 33/12, C01B 33/18

(54) **Organic plant derived precipitated silica aggregates, elastomers reinforced therewith and articles such as tires with component thereof**

(30) Priority: 16.11.2001 US 332608 P
(71) Applicant: THE GOODYEAR TIRE & RUBBER COMPANY, Akron, Ohio 44316-0001 (US)
(72) Inventor: Holden, Brian David, Cuyahoga Falls, Ohio 44221 (US)
(74) Representative: Leitz, Paul

(57) **Abstract**

The invention relates to preparation of plant-derived synthetic silica aggregates from organic plant sources, (e.g. rice husks), reinforcement of rubber compositions therewith and preparation of articles of manufacture, such as tires, having at least one component, (e.g. treads), as a rubber composition which contains said plant-derived precipitated silica aggregates. The invention further relates to such plant-derived silica aggregates having been pre-treated with an alkylsilane and/or organomercaptosilane. The invention additionally relates to the preparation of rubber compositions therewith with an addition of a starch/plasticizer composite. The invention further relates to preparation of articles of manufacture, including tires, having at least one component comprised of such prepared rubber composition such as, for example, tires having such components as treads, sidewalls and/or innerliners.

## Description

### Field of the Invention

The invention relates to preparation of plant-derived synthetic silica aggregates from organic plant sources, (e.g. rice husks), reinforcement of rubber compositions therewith and preparation of articles of manufacture, such as tires, having at least one component, (e.g. treads), as a rubber composition which contains said plant-derived precipitated silica aggregates. The invention further relates to such plant-derived silica aggregates having been pre-treated with an alkylsilane and/or organomercaptosilane. The invention additionally relates to the preparation of rubber compositions therewith with an addition of a starch/plasticizer composite.

The invention further relates to preparation of articles of manufacture, including tires, having at least one component comprised of such prepared rubber composition such as, for example, tires having such components as treads, sidewalls and/or innerliners.

### Background of the Invention

Synthetic amorphous precipitated silica is sometimes used to reinforce various diene-based rubber compositions. Such rubber compositions may be used, for example, as one or more components of articles of manufacture such as, for example, tires and various industrial products. Such precipitated silica is often used in conjunction with a coupling agent to aid in coupling the silica to the elastomer to enhance its reinforcing effect for the rubber composition. Such use of synthetic precipitated silicas is well known to those having skill in such art.

Conventionally, such precipitated silicas are derived from naturally occurring inorganic sand (e.g. SiO₂ having a trace mineral content). The inorganic sand is typically reacted with a strong base such as, for example, sodium hydroxide, to form a sodium silicate. The sodium silicate is converted to a precipitated silica (actually aggregates of primary precipitated silica particles) which contain hydroxyl groups (e.g. silanol groups) on its surface by controllably adding an acid (e.g. sulfuric acid) usually in the presence of an electrolyte (e.g. sodium sulfate). Actual operating conditions may vary considerably. The resulting precipitated silica aggregates may typically contain naturally occurring trace elements, namely trace metals, from the sand from which the silica is derived. Such preparation of precipitated silica aggregates from inorganic sand (e.g. sodium silicate as a product of sodium hydroxide and naturally occurring sand, or silicon dioxide) is, in general, well known to those having skill in such art. For example, see the Encyclopedia of Chemical Technology, Fourth Edition, Volume 21, (1997) Kirk-Othmer Dictionary, Pages 977 through 1032.

Thus, the term "silica", as may be referred to herein, is generally intended to mean synthetic amorphous aggregates of silica particles, unless the primary silica particles of which such aggregates are composed are referenced and unless otherwise indicated.

Pneumatic rubber tires are conventionally prepared with a rubber tread which can be a blend of various rubbers, or elastomers, which may be reinforced with carbon black, silica or mixtures or carbon black and silica.

Various US patents relating to silicas and silica reinforced tire treads include, for example, US-A- 3,451,458; 3,664,403; 3,768,537; 3,884,285; 3,938,574; 4,482,663; 4,519,430; 4,590,052; 5,066,721 and 5,089,554, although this list is hardly exhaustive.

Synthetic precipitated silicas aggregates of primary, or elemental, silica particles may be produced, for example, and as hereinbefore discussed, by forming a soluble silicate by reacting particles of silicon dioxide (eg: sand) with a strong base, such as sodium hydroxide, to form after dissolution an aqueous silicate solution; followed by destabilizing the silicate solution by addition of an organic or mineral acid and/or acidifying gas such as carbon dioxide to change the pH of the mixture and cause a reaction to take place from which the silica is precipitated, substantially in the form of fine particles of silicon dioxide which may be in the aforesaid aggregate form and may appear in a gel-like form. To promote the formation of aggregates of the precipitated silica, it is usually required that an electrolyte, such as for example a sodium nitrate, be present during the formation of the precipitated silica elementary particles. The resulting slurry, or gel, is conventionally filtered and washed with water to remove the reaction by-product, which is the alkali metal salt of the acidification agent. The filter cake is then typically dried to yield a silica of desired aggregate particle size. There are many variations of the precipitation process involving, for example, sequential and/or intermittent additions of the silicate solution and/or acid, control of the pH, optionally stopping the acid addition and aging of the mixture prior to resuming acid addition to reach the desired pH, aging the gel or filter cake prior to washing with water which might sometimes be called post aging and variations of various process temperatures and times. It is normally required, as hereinbefore discussed, that an electrolyte be present during at least one stage of the preparation process to promote the formation of aggregates of the primary silica particles.

A process of producing a silica may be found, for example, in EP-A-170 579.

The physical characterizations of the precipitated silicas, namely the aggregates thereof, can vary considerably as well as their use as reinforcement for elastomer(s) and resulting elastomer properties according to the selection of silicate reaction materials and reaction conditions.

For this invention, it desired to depart from a more conventional process of preparing inorganic sand-derived aggregates of precipitated silica in the reinforcement of rubber compositions for use as a component of a tire such as, for example, a tire tread and, instead, prepare organic plant-derived aggregates of precipitated silica from rice husks and use such aggregates, optionally, in combination with a coupling agent for a tire component.

Rice is a cultivated plant grown in a number of countries in the world of which its seed is used to form a fundamental component of many food products. Most other parts of the rice plant are cellulosic in nature have a rather minimal value other than a fuel value. For example, the rice husks, which encapsulate the seed, are often removed therefrom and used for fuel.

Interestingly, the rice husks are conventionally composed of organic carbon containing materials and also have a significant silicon dioxide, or SiO₂, content. Accordingly, as the husks are burned for fuel, the residue is composed primarily of silicon dioxide and trace metals contained therein which were derived from the soil.

Accordingly, it is a significant aspect of this invention that a process of preparing a tire component (e.g. tire tread) is provided by converting an organic plant-derived silicon dioxide to aggregates of precipitated silica, then blending such aggregates with a diene rubber based rubber optionally in combination with a coupling agent, and particularly a coupling agent of a bis(3-trialkoxysilylalkyl) polysulfide which contains an average of 2 to 2.6 sulfur atoms in its polysulfidic bridge is novel and is distinct from preparation and resultant use of inorganic sand-derived synthetic precipitated silica for such purpose.

In the description of this invention, the term "rice husk material" refers to a carbonaceous rice husk material which contains silicon dioxide (SiO₂), in a form of naturally occurring rice husks from rice plants, particularly harvested rice husks which are exclusive of the rice seed, or in a form of rice husk residues obtained by oxidizing said naturally occurring, and particularly said harvested, rice husks, wherein said oxidizing thereof is normally accomplished by the burning thereof in the presence of oxygen at an elevated temperature. Such rice husk material, particularly the oxidized residue thereof, contains a significant silicon dioxide (SiO₂) content. Said rice husk material typically contains a significant carbon content, thus being referred to being carbonaceous, either as an organic carbon-containing material in said harvested rice husks or as a residual carbon or carbon-based composite in the case of said rice husk residues.

In the description of this invention the term "sand" refers to naturally occurring inorganic, silicon dioxide particles and is intended to exclude non-amorphous, synthetically precipitated silica.

In the description of this invention, the term "rice husks" refers to the aforesaid outer covering of the rice seed, which substantially encapsulates the rice seed and which contains silica as found in naturally occurring rice plants material as a composite composed of silicon dioxide and cellulosic fibers.

In the description of this invention, a product of oxidized rice husks refers to rice husks which have been burned, as in oxidation thereof at an elevated temperature in the presence of air (e.g. oxygen) to form a composite of silicon dioxide and carbon or, in a case of more severe oxidation to remove carbon black, so that the material is primarily composed of silicon dioxide.

### Summary and Practice of the Invention

In accordance with this invention, a process of preparing aggregates of precipitated silica from naturally occurring rice plant husks comprises:
(A) reacting a rice plant product selected from rice husks and oxidized rice husks, which contain silicon dioxide, with an aqueous solution comprised of a strong base, such as for example, a base comprised of sodium hydroxide, to form a water solution and/or dispersion of a silicate thereof (e.g. sodium silicate);
(B) treating said silicate in said water solution and/or dispersion thereof by the addition of at least one acid thereto (e.g. an acid comprised of sulfuric acid or hydrochloric acid) and an electrolyte (e.g. an electrolyte comprised of sodium sulfate or sodium nitrate) to create an aqueous dispersion of colloidal primary silica particles which coalesce together to form aggregates of said primary particles and to reduce the pH of the solution and thereby precipitate said aggregates to obtain precipitated rice husk-derived silica aggregates.

In additional accordance with this invention, said rice plant-derived precipitated silica aggregates may be hydrophobated (preferably prior to its addition to a rubber composition) by reacting an alkylsilane of Formula (I) and/or an organomercaptosilane of Formula (II) with:
(A) said aggregates of said rice plant-derived synthetic precipitated silica, or
(B) an aqueous dispersion of said colloidal plant-derived silica particles from which said precipitated silica aggregates are recovered to form a silica composite thereof;
wherein said alkylsilane of said general Formula I is represented by

(I) Xₙ - Si - R₄₋ₙ

wherein R is an alkyl radical having from one to 18 carbon atoms, n is a value of from 1 to 3 and X is a radical selected from chlorine or bromine or alkoxy radical as (OR¹)-, wherein R¹ is an alkyl radical selected from methyl and ethyl radicals, and where said organomercaptosilane is of the general formula (II):

(II) (X)ₙ(R²O)₃₋ₙ - Si - R³- SH

wherein X is a radical selected from chlorine, bromine, and alkyl radicals having from one to 16 carbon atoms; wherein R² is an alkyl radical having from one to 16 carbon atoms and R³ is an alkylene radical having from one to 16 carbon atoms; and n is a value from zero to 3.

The hydrophobated precipitated silica aggregates might be recovered, for example, from said treated colloidal silica, for example as a treated silica hydrosol, with the aid of acid addition to the treated colloidal silica (for example, sulfuric acid or hydrochloric acid) followed by water washing and drying the recovered hydrophobated silica as a hydrophobated silica gel or, preferably, as hydrophobated precipitated silica aggregates for use in this invention. While this invention is not intended to be directed to a specific preparation technique (preparation of silica hydrosols, recovery of silica gels and precipitated silicas, etc.) of the pre-hydrophobated precipitated silica itself, for education purposes in this regard, reference might be made to US-A- 5,094,829 as well as US-A-5,708,069, 5,789,514 and 5,750,610 for a more detailed discussion.

Representative alkylsilanes of Formula (I) are, for example, trichloro methyl silane, dichloro dimethyl silane, chloro trimethyl silane, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

Representative organomercaptosilanes of formula (II) are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

In further accordance with this invention, such process additionally comprises the steps of preparing an unvulcanized, sulfur-containing, sulfur vulcanizable, rubber composition which comprises blending said precipitated rice husk-derived silica aggregates with, based upon parts by weight per 100 parts by weight rubber (phr):
(A) 100 phr of at least one elastomer selected from:
   (1) at least one diene-based elastomer selected from polymers of isoprene and/or 1,3-butadiene rubber and copolymers of styrene or alpha methylstyrene with isoprene and/or 1,3-butadiene,
   (2) at least one diene-based elastomer selected from polymers of isoprene and/or 1,3-butadiene rubber and copolymers of styrene or alpha methylstyrene with isoprene and/or 1,3-butadiene which has been tin or silicon coupled (preferably tin coupled) by reaction with tin tetrachloride or silicon tetrachloride (preferably tin tetrachloride),
   (3) at least one amine functionalized diene-based elastomer selected from polymers of isoprene and/or 1,3-butadiene rubber and copolymers of styrene or alpha methylstyrene with isoprene and/or 1,3-butadiene which has been tin coupled by reaction with tin tetrachloride, and
(B) 30 to 100 phr of at least one reinforcing filler selected from
   (1) carbon black and/or sand-derived aggregates of precipitated silica, preferably carbon black, and, optionally
   (2) 18 to 99 phr of carbon black and/or silica, preferably carbon black and, correspondingly, one to 12 phr of starch/plasticizer composite having a softening point in a range of 110°C to 170°C which contains hydroxyl groups thereon, and, optionally,
(C) a coupling agent having a moiety reactive with hydroxyl groups contained on the surface of said rice husk-derived silica aggregates, sand-derived silica aggregates and said starch/plasticizer composite.

Preferably, said coupling agent is as a bis(3-trialkoxysilylalkyl) polysulfide having an average of from 2 to 2.6, or from 3.5 to 4, preferably an average of from 2 to 2.6, connecting sulfur atoms in its polysulfidic bridge, preferably bis(3-triethoxysilylpropyl) polysulfide.

In further accordance with this invention, such process additionally comprises a process for preparation of an article of manufacture, such as a tire, which comprises applying said prepared rubber composition as a component of an article of manufacture, such as a tire, a tire assembly and vulcanizing said resultant assembly.

In practice, said component may be, for example, a tire tread, tire sidewall, tire innerliner, ply coat, wire coat, chafer, apex, sidewall insert, toe guard and bead coat (encapsulant).

Accordingly, and in further accordance with this invention, a process for preparation of a tire having a tread comprised of a rubber composition prepared according to this invention comprises:
(A) applying said a tread-strip of said rubber composition to the outer, peripheral, circumferential surface of an unvulcanized, sulfur-containing, sulfur vulcanizable open toroidially shaped rubber tire carcass to form an assembly thereof, and
(B) vulcanizing said assembly in a suitable mold at an elevated temperature and pressure to form a vehicular tire comprised of a circumferential rubber tread designed to be ground-contacting and an adherent underlying and supporting rubber carcass, wherein said tread rubber contains particulate reinforcement therein of aggregates of precipitated rice husk-derived silica coupled to at least one diene-based elastomer contained in said tread rubber.

Representative of such diene-based elastomers are, for example, cis 1,4-polyisoprene, cis 1,4-polybutadiene, trans 1,4-polybutadiene, styrene/butadiene polymers (organic solution polymerization derived and/or aqueous emulsion polymerization derived), vinyl polybutadiene having a vinyl content in a range of 30 to 90 percent, isoprene/butadiene polymers, styrene/isoprene polymers, styrene/isoprene/butadiene terpolymers, as well as tin or silicon coupled elastomers and as well as such elastomers modified with one or more of primary amines, secondary amines or heterocyclic amines, and as well as such elastomers modified by containing alkoxysilane groups.

Starch/plasticizer composites have been suggested for use in elastomer compositions for various purposes, including tires. For example, see US-A-5,672,639. In US-A- 6,273,163, a first and second coupling agent are sequentially mixed with the rubber composition, thereby substantially decoupling the action of the first coupling agent from the action of the second coupling agent. Various other patents, for example, US-A- 5,403,923; 5,374,671; 5,258,430 and 4,900,361 disclose preparation and use of various starch materials. As pointed in the aforesaid US-A- 5,672,639, starch may represented, for example, as a carbohydrate polymer having repeating units of amylose (anydroglucopyranose units joined by glucosidic bonds) and amylopetin, a branched chain structure, as is well known to those having skill in such art. Typically, starch may be composed of about 25 percent amylose and about 75 percent amylopectin. The Condensed Chemical Dictionary, Ninth Edition (1977)), revised by G.G. Hawley, published by Van Nostrand Reinhold Company, Page 813). Starch can be, reportedly, a reserve polysaccharide in plants such as, for example, corn, potatoes, rice and wheat as typical commercial sources.

Preferably said starch is comprised of amylose units and amylopectin units in a ratio of 15/85 to 35/65 and has a softening point according to ASTM No. D1228 in a range of 180°C to 220°C and where said starch/plasticizer composite has a softening point, reduced from said starch alone, in a range of 110°C to 170°C according to ASTM No. D1228 which is considered herein to be necessary or desirable to provide the starch/plasticizer composite softening point to approach of to be within the temperature region used for the mixing of the rubber composition itself.

As hereinbefore point out, the starch itself is typically composed of, for example, amylose units and amylopectin units in a ratio of 15/85 to 35/65, alternatively 20/80 to 30/70, and has a softening point according to ASTM No. D1228 in a range of 180°C to 220°C; and the starch/plasticizer composite has a softening point in a range of 110°C to 170°C according to ASTM No. D1228.

For the starch/plasticizer composite, in general, starch to plasticizer weight ratio is in a range of 0.5/1 to 4/1, alternatively 1/1 to 2/1, so long as the starch/plasticizer composition has the required softening point range, and preferably, is capable of being a free flowing, dry powder or extruded pellets, before it is mixed with the elastomer(s).

In practice, it is desired that the synthetic plasticizer itself is compatible with the starch, and has a softening point lower than the softening point of the starch so that it causes the softening of the blend of the plasticizer and the starch to be lower than that of the starch alone. This phenomenon of blends of compatible polymers of differing softening points having a softening point lower than the highest softening point of the individual polymer(s) in the blend is well known to those having skill in such art.

For the purposes of this invention, the plasticizer effect for the starch/plasticizer composite, (meaning a softening point of the composite being lower than the softening point of the starch), can be obtained, for example, through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. As hereinbefore stated, hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what are considered or believed herein to be relatively strong chemical and/or physical interactions between the starch and the plasticizer.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is selected from at least one of poly(ethylenevinyl alcohol) and cellulose acetate.

For example, the aforesaid poly(ethylenevinyl alcohol) might be prepared by polymerizing vinyl acetate to form a poly(vinylacetate) which is then hydrolyzed (acid or base catalyzed) to form the poly(ethylenevinyl alcohol). Such reaction of vinyl acetate and hydrolyzing of the resulting product is well known those skilled in such art.

For example, vinylalcohol/ethylene (60/40 mole ratio) copolymers can conventionally be obtained in powder and in pellet forms at different molecular weights and crystallinities such as, for example, a molecular weight of about 11,700 with an average particle size of about 11.5 microns or a molecular weight (weight average) of about 60,000 with an average particle diameter of less than 50 microns.

Various blends of starch and ethylenevinyl alcohol copolymers can then be prepared according to mixing procedures well known to those having skill in such art. For example, a procedure might be utilized according to a recitation in the patent publication by Bastioli, Bellotti and Del Trediu entitled A Polymer Composition Including Destructured Starch and Ethylene Copolymer, US-A-5,403,374.

Other plasticizers might be prepared, for example and so long as they have the appropriate Tg and starch compatibility requirements, by reacting one or more appropriate organic dibasic acids with aliphatic or aromatic diol(s) in a reaction which might sometimes be referred to as an "esterification condensation reaction". Such esterification reactions are well known to those skilled in such art.

Various commercially available sand-derived synthetic precipitated silica aggregates may also be blended with rubber composition in addition to the plant-derived synthetic silica aggregates of this invention for the reinforcement of diene based elastomers. Representative of such silicas, for example, only and without limitation, are silicas available from PPG Industries under the Hi-Sil trademark with designations 210, 243, etc; silicas available from Rhodia, with designations of Zeosil 1165MP and Zeosil 165GR, and silicas available from Degussa AG with designations of VN_{2,} VN_{3,} Ultrasil 3370 and Ultrasil 7005.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The presence and relative amounts of the above additives are not considered to be an aspect of the present invention which is more primarily directed to the process of preparing aggregates of precipitated rice husk derived silica, preparation of rubber compositions containing such rice husk-derived precipitated silica aggregates and preparation of articles, including tires, having at least one composition comprised of such rubber composition.

The tires can be built, shaped, molded and cured by various methods which will be readily apparent to those having skill in such art.

## Claims

1. A process of preparing aggregates of precipitated silica from naturally occurring rice plant husks **characterized by** comprising:
(A) reacting a rice plant product selected from rice husks and oxidized rice husks, which contain silicon dioxide, with an aqueous solution comprised of a strong base to form a water solution and/or dispersion of a silicate thereof;
(B) treating said silicate in said water solution and/or dispersion which comprises adding at least one acid and an electrolyte thereto, to create an aqueous dispersion of colloidal primary silica particles which coalesce together to form aggregates of said primary particles and to reduce the pH of the solution and thereby precipitate said aggregates to obtain precipitated rice husk-derived silica aggregates.

2. The process of claim 1 wherein said rice plant product is oxidized rice husks, wherein said strong base is comprised of sodium hydroxide, wherein said acid is comprised of sulfuric acid or hydrochloric acid and said electrolyte is comprised of sodium sulfate or sodium nitrate.

3. The process of either of the previous claims wherein said rice plant-derived precipitated silica aggregates are hydrophobated by reacting an alkylsilane of Formula (I) and/or an organomercaptosilane of Formula (II) with:
(A) said aggregates of said rice plant-derived synthetic precipitated silica, or
(B) an aqueous dispersion of said colloidal plant-derived silica particles from which said precipitated silica aggregates are recovered to form a silica composite thereof;
wherein said alkylsilane of said general Formula I is represented by
(I) Xₙ - Si - R₄₋ₙ
wherein R is an alkyl radical having from one to 18 carbon atoms, n is a value of from 1 to 3 and X is a radical selected from chlorine or bromine or alkoxy radical as (OR¹) -, wherein R¹ is an alkyl radical selected from methyl and ethyl radicals, and where said organomercaptosilane is of the general formula (II):
(II) (X)ₙ(R²O)₃₋ₙ - Si - R³- SH
wherein X is a radical selected from chlorine, bromine, and alkyl radicals having from one to 16 carbon atoms; wherein R² is an alkyl radical having from one to 16 carbon atoms and R³ is an alkylene radical having from one to 16 carbon atoms; and n is a value from zero to 3.

4. The process of claim 3 wherein said rice plant derived aggregates of precipitated silica are hydrophobated by reacting an alkylsilane of Formula (I) and an organomercaptosilane of Formula (II) with said aggregates of said rice plant-derived synthetic precipitated silica; and wherein said alkylsilanes of Formula (I) are selected from one of trichloro methyl silane, dichloro dimethyl silane, chloro trimethyl silane, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, or diethoxy dimethyl silane; and wherein said organomercaptosilanes of formula (II) are selected from triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane or tripropoxy mercaptopropyl silane.

5. The process of any of the preceding claims which additionally comprises the steps of preparing an unvulcanized, sulfur-containing, sulfur vulcanizable, rubber composition which comprises blending said precipitated rice husk-derived silica aggregates with, based upon parts by weight per 100 parts by weight rubber (phr):
(A) 100 phr of at least one elastomer selected from:
(1) at least one diene-based elastomer selected from polymers of isoprene and/or 1,3-butadiene rubber and copolymers of styrene or alpha methylstyrene with isoprene and/or 1,3-butadiene,
(2) at least one diene-based elastomer selected from polymers of isoprene and/or 1,3-butadiene rubber and copolymers of styrene or alpha methylstyrene with isoprene and/or 1,3-butadiene which has been tin coupled by reaction with tin tetrachloride,
(3) at least one amine functionalized diene-based elastomer selected from polymers of isoprene and/or 1,3-butadiene rubber and copolymers of styrene or alpha methylstyrene with isoprene and/or 1,3-butadiene which has been tin coupled by reaction with tin tetrachloride, and
(B) 30 to 100 phr of at least one reinforcing filler selected from
(1) carbon black and/or sand-derived aggregates of precipitated silica, preferably carbon black, and, optionally
(2) 18 to 99 phr of carbon black and/or silica and, correspondingly, one to 12 phr of starch/plasticizer composite having a softening point in a range of 110°C to 170°C which contains hydroxyl groups thereon, and, optionally,
(C) a coupling agent having a moiety reactive with hydroxyl groups contained on the surface of said rice husk-derived silica aggregates, sand-derived silica aggregates and said starch/plasticizer composite.

6. The process of either of the preceding claims 4 and 5 wherein said process additionally comprises the preparation of
(A) an article of manufacture by applying said prepared rubber composition as a component of an article of manufacture to form an assembly thereof and vulcanizing the resulting assembly; or
(B) a tire by applying said prepared rubber composition as a component of a tire to form an assembly thereof and vulcanizing the assembly; or
(C) a tire having a tread comprised of a rubber composition by
(1) applying said a tread-strip of said rubber composition to the outer, peripheral, circumferential surface of an unvulcanized, sulfur-containing, sulfur vulcanizable open toroidially shaped rubber tire carcass to form an assembly thereof, and
(2) vulcanizing said assembly in a suitable mold at an elevated temperature and pressure to form a vehicular tire comprised of a circumferential rubber tread designed to be ground-contacting and an adherent underlying and supporting rubber carcass, wherein said tread rubber contains particulate reinforcement therein of aggregates of precipitated rice husk-derived silica coupled to at least one diene-based elastomer contained in said tread rubber.

7. Aggregates of precipitated silica prepared according to the process of any of the preceding claims 1 through 4.

8. A rubber composition prepared according to the process of claim 5.

9. An article of manufacture prepared according to the process of claim 6.

10. A tire prepared according to the process of claim 6.
